# EUROPÄISCHE PATENTSCHRIFT

(11) **EP 1 235 682 B1**
(45) Veröffentlichungstag und Bekanntmachung des Hinweises auf die Patenterteilung: **22.10.2003**
(21) Anmeldenummer: 00964136.6
(22) Anmeldetag: 07.09.2000
(51) Int. Cl.: B32B 15/01

(54) **VERWENDUNG EINER WARMFESTEN LEGIERUNG MIT GUTER HOCHTEMPERATURBESTÄNDIGKEIT FÜR FOLIEN ODER ALS HEIZLEITER**
USE OF A HEAT RESISTANT ALLOY WITH GOOD HIGH TEMPERATURE OXIDATION RESISTANCE AS FOIL OR ELECTRICAL HEATING CONDUCTOR
UTILISAGE D'UN ALLIAGE RESISTANT A LA CHALEUR, PRESENTANT UNE BONNE STABILITE A L'OXIDATION A HAUTE TEMPERATURE COMME FEUILLE OU CONDUCTEUR ELECTRIQUE A CHAUFFER

(30) Priorität: 30.11.1999 DE 19957646
(43) Veröffentlichungstag der Anmeldung: 04.09.2002
(73) Patentinhaber: ThyssenKrupp VDM GmbH, 58791 Werdohl (DE)
(72) Erfinder: HOJDA, Ralf, 58762 Altena (DE); KOLB-TELIEPS, Angelika, 58511 Lüdenscheid (DE)
(86) Internationale Anmeldenummer: EP0008743
(87) Internationale Veröffentlichungsnummer: WO01039971

(56) Entgegenhaltungen:
- EP-A- 0 283 910
- EP-A- 0 511 699
- EP-A- 0 874 062
- DE-A- 19 652 399
- GB-A- 1 116 377
- US-A- 4 535 034
- "Metals Handbook, 10 Ausgabe, Band 1 " , AMERICAN SOCIETY FOR METALS , OHIO, US XP002161170 Seite 843

## Beschreibung

Die Erfindung betrifft eine Verwendung einer Legierung mit hoher Hochtemperaturoxidationsbeständigkeit und hoher Warmfestigkeit.

Im Industrieofen und Anlagenbau, in Abgasanlagen von Kraftfahrzeugen sowie als Widerstands- oder Heizleiterlegierung werden oft aluminiumhaltige Edelstähle und Nickel-Basis-Legierungen wegen ihrer guten Oxidationsbetändigkeit und Warmfestigkeit eingesetzt. Werden aus wirtschaftlichen Gründen geringe Wanddicken und / oder hohe Temperaturen und/oder Bauteilbelastungen gewählt, reichen die in typischen Nickel-Basis-Legierungen enthaltenen Aluminiumgehalte zwischen 1-3%, wie durch die Werkstoffe 2.4633 oder 2.4851 (DIN-Werkstoffnummer) definiert, nicht aus um über einen langen Zeitraum eine schützende Aluminiumoxidschicht auszubilden. Die sich in Folge einer Aluminiumverarmung bildenden Chromoxide bergen die Gefahr bei Temperaturen > 1000°C abzudampfen und das Glühgut zu kontaminieren.

Metallische Werkstoffe auf Basis von Eisen-Chrom-Aluminium, wie sie durch die Werkstoffnummer entsprechend DIN 1.4767 beschrieben sind, werden beispielsweise als Trägerfolien in metallischen Abgaskatalysatoren oder als elektrische Heizleiter eingesetzt.

Üblicherweise enthalten diese Eisen-Basis-Legierungen etwa 20 % Cr, 5 % Al und Zusätze von Zirkon, Titan und Seltenerdmetallen (Lanthanoide), wie z. B. in DE-C 3706415 beschrieben, die die Haftfestigkeit der Oxidschicht verbessern und somit die erforderliche Oxidationsbeständigkeit bei hohen Temperaturen bis zu 1200°C sicherstellen.

Als Träger für Automobilabgaskatalysatoren werden zur Zeit üblicherweise Metallfolien mit einer Dicke von 50 - 70 µm eingesetzt. Den steigenden Anforderungen an den Umweltschutz Rechnung tragend, nimmt die Foliendicke immer weiter ab. In gleichem Maße wie die Foliendicke reduziert wird, werden Forderungen nach erhöhter Warmfestigkeit gestellt, die auch mit Legierungen, wie in EP-A 0516097 beschrieben, nicht darstellbar sind.

DE-C 19524234 beschreibt eine knetbare Nickel-Basis-Legierung mit 25 - 30 % Cr, 8 - 11 % Fe, 2,4 - 3,0 % Al. Der Werkstoff zeichnet sich durch hohe Warmfestigkeit und Zeitstandfestigkeit bei Temperaturen bis 1200 °C aus. Folien < 50 µm, wie sie dem Stand der Entwicklung Rechnung tragend für Trägerfolien in Automobilabgaskatalysatoren eingesetzt werden sollen, können in dieser Legierung nur unter erschwerten Bedingungen und mit hohen Kosten hergestellt werden.

Die beschriebenen Eisen-Basis-Legierungen mit etwa 20% Cr, 5% Al und Zusätzen von Zirkon, Titan und Seltenerdmetallen zeichnen sich durch eine hervorragende Hochtemperaturoxidationsbeständigkeit aus, verfügen aufgrund des ferritischen Gefüges jedoch oft nicht über eine für viele Hochtemperaturanwendungen erforderliche Warmfestigkeit. Nickel-Basis-Legierungen, wie zum Beispiel durch DIN Werkstoffnummer 2.4851 beschrieben, erreichen durch das austenitische Gefüge gute Warmfestigkeiten in Verbindung mit einer guten Hitzebeständigkeit. Im Bezug auf die Hochtemperaturoxidationsbeständigkeit zeigen diese Legierungen, im Vergleich zu den oben beschriebenen ferritischen Werkstoffen, ein schlechteres Verhalten, da eine Anhebung des Aluminiumgehaltes in Nickel-Basis-Knetlegierungen auf mehr als 4% bisher wegen der mit hohen Aluminiumgehalten verbundenen Umformprobleme nicht möglich war.

Aber gerade die Kombination aus Warmfestigkeit und guter Hochtemperaturoxidationsbeständigkeit wird in Automobilabgaskatalysatoren, dem Ofen- und Anlagenbau und in Abgasanlagen zur Beherrschung der Prozeßparameter dringend benötigt.

Der GB-A 1,116,377 ist ein Verbundwerkstoff zu entnehmen, wobei eine ggf. mit einer 7072-Legierung beschichtete Al-2024 Legierung durch Walzen mit einem Blech aus einer austenitischen Legierung verbunden wird. Die austenitische Legierung soll hierbei 8 - 10 % Ni und 14 - 18 % Cr aufweisen. Der Al-Gehalt soll 0,75 - 1,5 %, der C-Gehalt max. 0,09 %, der Mn-Gehalt max. 1,6 %, der S-Gehalt max. 0,03 % und der Cr-Gehalt max. 1,0 % betragen. Vor dem Walzen wurde die ggf. als Verbund ausgebildete Al-2024 Legierung bei 482°C für 10 Minuten erwärmt. Nach dem Walzen erfolgte eine Glühbehandlung bei 493°C für 20 Minuten und daran anschließender Abkühlung in kaltem Wasser.

Der EP-A 0 511 699 sowie der DE-A 196 52 399 sind ferritische mit Aluminium beschichtete Legierungen samt Umformung und Wärmebehandlung zu entnehmen, die jedoch auf austenitische Legierungen nicht anwendbar sind.

Schließlich betrifft die US-A 4,535,034 eine austenitische Legierung folgender Zusammensetzung: max. 0,7 % C, max. 3 % Si, max. 2 % Mn, 10 - 40 % Ni, 9 - 30 % Cr, 2 - 8 % Al, Rest Fe, nebst herstellungsbedingten Verunreinigungen. Die Legierung wird als Blech vorgesehen, das durch Heißtauchen mit Aluminium beschichtet und einer anschließenden Wärmebehandlung unterzogen wird. Eine Umformung ist nicht vorgesehen. Dieses Verbundmaterial soll bevorzugt im großtechnischen Anlagenbau eingesetzt werden.

Der Erfindung liegt die Aufgabe zu Grunde, eine Folie oder einen Heizleiter oder Widerstandswerkstoff aus einer Legierung zur Verfügung zu stellen, aus welcher ohne erhöhten Aufwand Bauteile auch in Abmessungen < 50 µm hergestellt werden können, die eine hohe Hochtemperaturoxidationsbeständigkeit und eine Warmfestigkeit von > 50 MPa bis 1000°C aufweist.

Diese Aufgabe wird gelöst durch eine Verwendung einer Legierung mit hoher Hochtemperaturoxidationsbeständigkeit und hoher Warmfestigkeit für Folien in Abgasanlagen von Kraftfahrzeugen, insbesondere als Katalysatorträgerfolie, oder als Heizleiter oder Widerstandswerkstoff, wobei ein Grundwerkstoff aus einer austenitischen, warmfesten Nickel-Basis-Legierung oder austenitischen Cobalt-Basis-Legierung oder einem austenitischen Edelstahl guter Umformbarkeit ein- oder beidseitig mit einer Schicht aus Aluminium oder einer Aluminium-Legierung beschichtet und dieser aus Grundwerkstoff und Aluminiumauflage gebildete Verbundwerkstoff mit guter Haftung durch Umformung mit oder ohne Zwischenglühung an Endabmessung gebracht wird, wobei ein Grundwerkstoff folgender Analyse (in Masse-%) eingesetzt wird:

| Ni | Cr | C | Al | Fe |
|---|---|---|---|---|
| 20-80 | 10-35 | 0,01-0,4 | < 4 | Rest |
| + der üblichen Begleitelemente | | | | |

und wobei der eingesetzte Grundwerkstoff mindestens einen der folgenden maximalen Zusätze (in Masse-%) enthält:
5 % Co, 10 % Mo, 4 % W, 4 % Nb, 5 % Ta, 4 % Si, 3 % Ti, 5 % Cu.

Vorteilhafte Weiterbildungen des Erfindungsgegenstandes gemäß nebengeordneten Hauptansprüchen sind den jeweils zugehörigen Unteransprüchen zu entnehmen.

Der erfindungsgemäß verwendete mehrlagige Verbundwerkstoff wird vorzugsweise hergestellt, indem ein Grundwerkstoff aus einer austenitischen, warmfesten Nickel-Basis-Legierung oder Cobalt-Basis-Legierung oder Edelstahl guter Umformbarkeit ein- oder beidseitig mit einer Schicht aus Aluminium oder einer Aluminium-Legierung beschichtet wird, und dieser aus Grundwerkstoff und Aluminiumauflage gebildete Verbundwerkstoff mit guter Haftung durch Umformung mit oder ohne Zwischenglühung an Endabmessung gebracht und bei einer Temperatur > 600°C diffusionsgeglüht wird. Die Diffusionsglühung kann je nach Anforderung an das Endprodukt an Zwischen-/Endabmessung oder einem späteren Verarbeitungsschritt erfolgen.

Überraschender Weise läßt sich durch dieses Verfahren ein homogener Werkstoff mit guter Warmfestigeit und guter Hochtemperaturoxidationsbeständigkeit bei einfacher Verarbeitbarkeit herstellen.

Im folgenden werden einige Beispiele vorgestellt, die die guten Werkstoffeigenschaften des erfindungsgemäß verwendeten Verbundwerkstoffes dokumentieren.

### Beispiel 1

Der Grundwerkstoff hat die Zusammensetzung

| Ni | Cr | C | Mn | Si | Al | Ti | Fe |
|---|---|---|---|---|---|---|---|
| 31,5 | 20,1 | 0,02 | 0,4 | 0,4 | 0,2 | 0,4 | Rest |

Der Grundwerkstoff wurde als Block abgegossen, warm zu Brammen und anschließend zu 3,5 mm dickem Warmband verarbeitet. Durch Kaltwalzen wurde er dann bis auf eine Dicke von 0,6 mm weiterverformt, weichgeglüht und sodann durch Walzplattieren mit einer Auflage von 4,7 Masse% Aluminium beschichtet. Der beschichtete Werkstoffverbund konnte ohne eine weitere Wärmebehandlung zu einer 50µm dünnen Folie gewalzt werden. Nach einer Diffusionsglühung oberhalb von 600°C entstand ein homogener Werkstoff mit einer Warmfestigkeit von 60 MPa bei 1000°C. Das Hochtemperaturoxidationsbeständigkeit wurde nach einer Auslagerung bei 1100°C untersucht. Nach 400 h veränderte sich die Masse der Probe um weniger als 7,6%.

### Beispiel 2

Der Grundwerkstoff hat die Zusammensetzung

| Ni | Cr | C | Mn | Si | Al | Ti | Fe |
|---|---|---|---|---|---|---|---|
| 30,5 | 20,1 | 0,04 | 0,4 | 0,5 | 0,3 | 0,4 | Rest |

Der Grundwerkstoff wurde als Block abgegossen, warm zu Brammen und anschließend zu 3,5 mm dickem Warmband verarbeitet. Durch Kaltwalzen wurde er dann bis auf eine Dicke von 0,6 mm weiterverformt, weichgeglüht und sodann durch Walzplattieren mit einer Auflage von 8,0 Masse% Aluminium beschichtet. Der beschichtete Werkstoffverbund konnte ohne eine weitere Wärmebehandlung zu einer 50µm dünnen Folie gewalzt werden.

## Patentansprüche

1. Verwendung einer Legierung mit hoher Hochtermpaturkorrosionsbeständigkeit und hoher Warmfestigkeit, mit einem Grundwerkstoff aus einer austenitischen, warmfesten Nickel-Basis-Legierung oder austenitischen Cobalt-Basis-Legierung oder einem austenitischen Edelstahl guter Umformbarkeit, der ein- oder beidseitig mit einer Schicht aus Aluminium oder einer Aluminium-Legierung beschichtet und dieser aus Grundwerkstoff und Aluminiumauflage gebildete Verbundwerkstoff mit guter Haftung durch Umformung mit oder ohne Zwischenglühung an Endabmessung gebracht wird, wobei der Grundwerkstoff folgender Analyse (in Masse-%) aufweist:
| | |
|---|---|
| Ni | 20 - 80 % |
| Cr | 10 - 35 % |
| C | 0,01 - 0,4 % |
| Al | < 4 % |
| Fe | Rest |
einschließlich herstellungsbedingter Verunreinigungen mit mindestens einem der folgenden maximalen Zusätze (in Masse-%)
| | |
|---|---|
| Co | 5 % |
| Mo | 10 % |
| W | 4 % |
| Nb | 4 % |
| Ta | 5 % |
| Si | 4 % |
| Ti | 3 % |
| Cu | 5 % |
für Folien in Abgasanlagen von Kraftfahrzeugen, insbesondere als Katalysatorträgerfolie.

2. Verwendung einer Legierung mit hoher Hochtemperaturkorroionsbeständigkeit und hoher Warmfestigkeit, mit einem Grundkwerstoff aus aus einer austenitischen, warmfesten Nickel-Basis-Legierung oder austenitischen Cobalt-Basis-Legierung oder einem austenitischen Edelstahl guter Umformbarkeit, der ein- oder beidseitig mit einer Schicht aus Aluminium oder einer Aluminium-Legierung beschichtet und dieser aus Grundwerkstoff und Aluminiumauflage gebildete Verbundwerkstoff mit guter Haftung durch Umformung mit oder ohne Zwischenglühung an Endabmessung gebracht wird, wobei der Grundwerkstoff folgender Analyse (in Masse-%) aufweist:
| | |
|---|---|
| Ni | 20 - 80 % |
| Cr | 10 - 35 % |
| C | 0,01 - 0,4 % |
| Al | < 4 % |
| Fe | Rest |
einschließlich herstellungsbedingter Verunreinigungen mit mindestens einem der folgenden maximalen Zusätze (in Masse-%)
| | |
|---|---|
| Co | 5 % |
| Mo | 10 % |
| W | 4 % |
| Nb | 4 % |
| Ta | 5 % |
| Si | 4 % |
| Ti | 3 % |
| Cu | 5 % |
als Heizleiter oder Widerstandswerkstoff.

3. Verwendung nach Anspruch 1 oder 2, **dadurch gekennzeichnet, daß** der mehrlagige Werkstoffverbund an Endabmessung bei einer Temperatur >600°C diffusionsgeglüht wird.

4. Verwendung nach einem der Ansprüche 1 bis 3, **dadurch gekennzeichnet, daß** der eingesetzte Grundwerkstoff eines oder mehrere der sauerstoffaffinen Elemente Seltenerdmetalle, Hafnium, Zirkonium, Silizium, Titan, Yttrium, Aluminium enthält.

## Claims

1. Use of an alloy having a strong high temperature corrosion resistance and a strong heat resistance, comprising a base material composed of an austenitic, heat resistant nickel master alloy or of an austenitic cobalt master alloy or of an austenitic stainless steel having a good formability, which is coated on one side or both sides with a layer composed of aluminium or an aluminium alloy and this composite material formed by the base material and the aluminium coating having a good adhesion is formed to its final dimension by deformation with or without intermediate annealing, the base material comprising the following analysis (in % by mass):
| | |
|---|---|
| Ni | 20 - 80% |
| Cr | 10 - 35% |
| C | 0.01 - 0.4% |
| Al | < 4% |
| Fe | rest |
including production dependent impurities with at least one of the following maximum additions (in % by mass)
| | |
|---|---|
| Co | 5% |
| Mo | 10% |
| W | 4% |
| Nb | 4% |
| Ta | 5% |
| Si | 4% |
| Ti | 3% |
| Cu | 5% |
as foils in exhaust gas installations of motor vehicles, in particular as catalyst carrier foil.

2. Use of an alloy having a strong high temperature corrosion resistance and a strong heat resistance, comprising a base material composed of an austenitic, heat resistant nickel master alloy or of an austenitic cobalt master alloy or of an austenitic stainless steel having a good formability, which is coated on one side or both sides with a layer composed of aluminium or an aluminium alloy and this composite material formed by the base material and the aluminium coating having a good adhesion is formed to its final dimension by deformation with or without intermediate annealing, the base material comprising the following analysis (in % by mass):
| | |
|---|---|
| Ni | 20 - 80% |
| Cr | 10 - 35% |
| C | 0.01 - 0.4% |
| Al | < 4% |
| Fe | rest |
including production dependent impurities with at least one of the following maximum additions (in % by mass)
| | |
|---|---|
| Co | 5% |
| Mo | 10% |
| W | 4% |
| Nb | 4% |
| Ta | 5% |
| Si | 4% |
| Ti | 3% |
| Cu | 5% |
as heat conductor or heating resistor material.

3. Use according to claim 1 or 2, **characterized in that** the multi-layer composite material is homogenized at a temperature of >600°C to obtain the final dimension.

4. Use according to one of the claims 1 through 3, **characterized in that** the used base material contains one or more of the oxygen affine elements, such as rare earth metals, hafnium, zirconium, silicium, titanium, yttrium, aluminium.

## Revendications

1. Utilisation d'un alliage présentant une haute résistance à la corrosion à haute température et une haute résistance à la chaleur, comprenant un matériau de base composé d'un alliage austénitique sur base de nickel et résistant à la chaleur ou d'un alliage austénitique sur base de cobalt ou d'un acier spécial austénitique ayant une bonne formabilité, qui est revêtu sur un côté ou sur les deux côtés d'une couche d'aluminium ou d'alliage d'aluminium et ce matériau composite formé du matériau de base et du revêtement d'aluminium et ayant une bonne adhésion est formé à la dimension finale par déformation avec ou sans recuit intermédiaire, le matériau de base comprenant l'analyse suivante (en % en poids):
| | |
|---|---|
| Ni | 20 - 80% |
| Cr | 10 - 35% |
| C | 0,01 - 0,4% |
| Al | < 4% |
| Fe | reste |
des impuretés résultant de l'élaboration y compris, avec au moins une des additions maximales suivantes (en % en poids)
| | |
|---|---|
| Co | 5% |
| Mo | 10% |
| W | 4% |
| Nb | 4% |
| Ta | 5% |
| Si | 4% |
| Ti | 3% |
| Cu | 5% |
en tant que feuilles dans des installations des gaz d'échappement des véhicules automobiles, notamment en tant que feuille de support de catalyseur.

2. Utilisation d'un alliage présentant une haute résistance à la corrosion à haute température et une haute résistance à la chaleur, comprenant un matériau de base composé d'un alliage austénitique sur base de nickel et résistant à la chaleur ou d'un alliage austénitique sur base de cobalt ou d'un acier spécial austénitique ayant une bonne formabilité, qui est revêtu sur un côté ou sur les deux côtés d'une couche d'aluminium ou d'alliage d'aluminium et ce matériau composite formé du matériau de base et du revêtement d'aluminium et ayant une bonne adhésion est formé à la dimension finale par déformation avec ou sans recuit intermédiaire, le matériau de base comprenant l'analyse suivante (en % en poids):
| | |
|---|---|
| Ni | 20 - 80% |
| Cr | 10 - 35% |
| C | 0,01 - 0,4% |
| Al | < 4% |
| Fe | reste |
des impuretés résultant de l'élaboration y compris, avec au moins une des additions maximales suivantes (en % en poids)
| | |
|---|---|
| Co | 5% |
| Mo | 10% |
| W | 4% |
| Nb | 4% |
| Ta | 5% |
| Si | 4% |
| Ti | 3% |
| Cu | 5% |
en tant que conducteur chauffant ou matériau pour résistance électrique.

3. Utilisation selon la revendication 1 ou 2, **caractérisé en ce que** le matériau composite aux couches multiples est homogénéisé à une température de >600°C pour obtenir la dimension finale.

4. Utilisation selon l'une des revendications 1 à 3, **caractérisé en ce que** le matériau de base utilisé contient un ou plusieurs des éléments des terres rares, d'hafnium, de zirconium, de silicium, de titane, d'yttrium, d'aluminium, qui ont une affinité à l'oxygène.
